# EUROPEAN PATENT APPLICATION

(11) **EP 4 446 022 A1**
(43) Date of publication of application: **16.10.2024**
(21) Application number: 23461557.3
(22) Date of filing: 13.04.2023
(51) Int. Cl.: B08B 9/08, B08B 9/093, B64D 11/02

(54) **TANK RINSING ARRANGEMENT**

(71) Applicant: B/E Aerospace, Inc., Winston-Salem, NC 27105 (US)
(72) Inventor: KROCZEK, Piotr Jacek, 51-317 Wroclaw (PL); TUREK, ukasz, 51-317 Wroclaw (PL)
(74) Representative: Dehns

(57) **Abstract**

A rinse arrangement for cleaning an interior volume of a tank, the arrangement comprising: a tank (100), the interior of which is to be cleaned, the tank having a top (104), a bottom (106), and, extending from the top to the bottom, an outer wall (102) and an inner wall (108) defining the interior volume (110); and a rinse fluid inlet port (112) mounted to an upper region of the tank, the inlet port having a first end and configured to be fluidly connected to a rinse fluid supply, in use, and a second end that extends into the tank interior; and wherein the inner wall (108) has a convex shape from the top to the bottom, defining a convex surface (C) curving in towards the interior volume (110).

## Description

### TECHNICAL FIELD

The present disclosure relates to ways of cleaning the interior of a tank such as, but not exclusively, a waste tank e.g. in an aircraft.

### BACKGROUND

Tanks or reservoirs containing matter such as waste from a sanitation system, or other matter, which may be contaminated or hazardous or generally undesirable if left on the inner surfaces of the tank for a period of time often include a device that extends into and sprays water or some cleaning fluid around the tank to clean the tank. This can avoid the need for manual cleaning of the tank which can be unpleasant or even dangerous. Furthermore, the tanks are often too small to enable a person to access the interior to clean it properly, or the tank may be vacuum sealed and so not accessible for manual cleaning and/or access to the tanks may be too difficult for the tank to be cleaned by a person. Passenger aircraft include large tanks for human waste from the aircraft toilets. These tanks are emptied after a flight and the inside of the tank is cleaned. This is usually done by means of a device, known as a rinse nipple, having nozzles through which pressurised water or a cleaning solution is sprayed around the interior of the tank.

A conventional rinse nipple includes a housing part to which a rinse hose providing the cleaning fluid is connected. The housing extends through the tank wall. A rinse head is provided at the end of the housing located inside the tank. The rinse head is provided with multiple openings or nozzles and the pressurised fluid is ejected out through the nozzles to clean the tank. Some rinse nipples have a rotatable rinse head. To avoid the need for power to be supplied to rotate the rinse head, the openings or nozzles are angled and offset relative to the axis of rotation of the head. This positioning provides momentum about the axis to cause the head to spin about the axis thus maximising the coverage of the fluid inside the tank.

Whilst the multiple nozzles and spinning head ensures that the fluid is sprayed as much as possible around the tank interior, due to the presence of various components and fittings that may be provided on the tank walls, extending to the tank interior, there may be some areas that are effectively obstructed or hidden by these components and are not reached by the spray from the spinning head. Furthermore, particularly when the tanks are large. The fluid may not reach the bottom of the tank, or may not reach the bottom with sufficient force to provide effective cleaning. This can result in waste material or the like remaining in those areas where the pressurised fluid does not reach, and clogging or building up. The tank cannot, therefore, be fully purged of all of the waste, which can cause contamination of the tank.

There is, therefore, a need for a cleaning arrangement that can ensure that a greater area of the tank interior is contacted by the cleaning fluid.

### SUMMARY

According to the present disclosure, there is provided a rinse arrangement for cleaning an interior volume of a tank, the arrangement comprising: a tank, the interior of which is to be cleaned, the tank having a top, a bottom, and, extending from the top to the bottom, an outer wall and an inner wall defining the interior volume; and a rinse fluid inlet port mounted to an upper region of the tank, the inlet port having a first end and configured to be fluidly connected to a rinse fluid supply, in use, and a second end that extends into the tank interior; and wherein the inner wall has a convex shape from the top to the bottom, defining a convex surface curving in towards the interior volume.

A cleaning method is also provided.

### BRIEF DESCRIPTION

Examples of the rinse device according to this disclosure will be described with reference to the drawings. It should be noted that these are merely examples and variations are possible within the scope of the claims.
Figure 1 shows an example of a known tank and rinse arrangement for the purposes of explanation.
Figure 2 is shown to explain the problem of the known device such as shown in Fig. 1.
Figure 3 shows an example of a rinse arrangement according to the disclosure.
Figure 4A is a more detailed view of a rinse arrangement according to the disclosure.
Figure 4B shows a detail of the example of Fig. 4A
Figure 5 shows a top view of the arrangement such as shown in Fig. 3.
Figure 6 illustrates how rinse fluid flows into an arrangement according to the disclosure.
Figure 7 shows an example of how rinse fluid flows through a tank according to the disclosure.
Figure 8 shows another example of how rinse fluid flows through a tank according to the disclosure.

### DETAILED DESCRIPTION

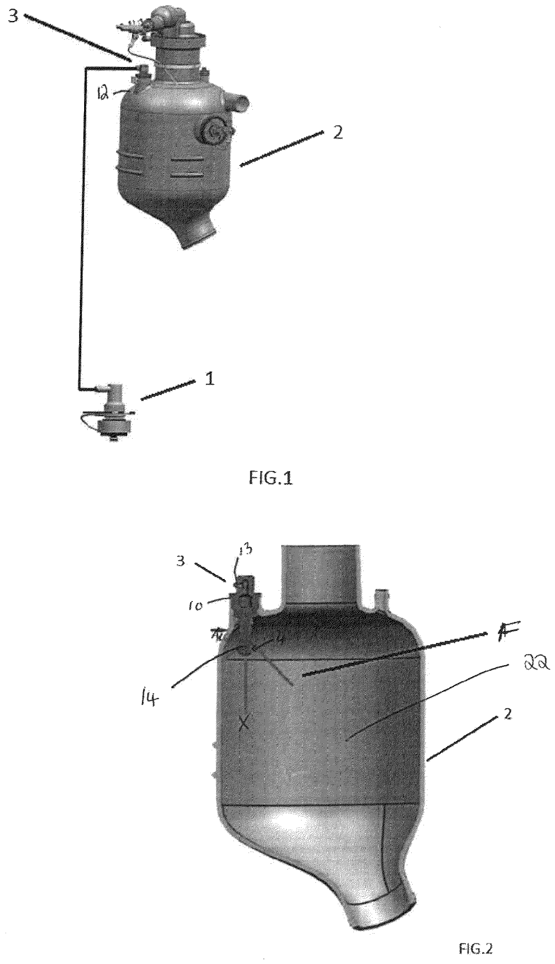

A typical rinse device is shown in Figs. 1 and 2. A rinse nozzle 3 is shown mounted in the wall 12 of a tank 2 or vat or other reservoir. The rinse nozzle 3 is connected, in use, to a rinse port 1 from which rinse fluid is provided to the rinse nozzle from a rinse fluid supply (not shown). Figure 2 shows, in cross-section, the rinse nozzle 3 mounted in the wall 12 of the tank 2, at the top of the tank. Apertures or jets 4 are formed in the nozzle 3 such that as rinse fluid is provided to the nozzle 3 it is sprayed out through the jets 4 around the interior 22 of the tank to clean the tank. A typical nozzle 3 comprises a housing 10, one end of which is provided with a fitting 13 arranged to be attached to a pipe or the like via which pressurised water or cleaning solution is provided. At the other end of the housing through which the pressurised fluid flows, which extends into the tank, is mounted a rinse head 14 mounted to rotate relative to the housing 10. The rinse head is arranged to rotate about an axis of rotation X which is the axis through the housing from the one end to the other end.

The rinse head 14 is provided with a number of holes or jets 4 via which the pressurised fluid F forced through the housing is ejected into the tank. The jets can be positioned offset from the axis of rotation and at angles such that the ejection of the pressurised fluid F provides a force that causes the rinse head 14 to rotate relative to the housing about the axis X.

The pressurisation of the fluid and the rotation of the rinse head provides a good range of coverage of the interior of the tank with cleaning fluid. In some cases, however, areas may exist, due to the presence of other components on the inside of the tank, that fluid from the rinse head cannot reach. Alternatively, because the rinse nozzle is typically small and mounted into the top of the tank, the pressurized fluid F may not adequately reach the bottom or other locations in the interior of the tank, or at least not with sufficient force to adequately clean the tank. Furthermore, as can be seen in Fig. 2, the jets do not clean the tank in a symmetrical manner.

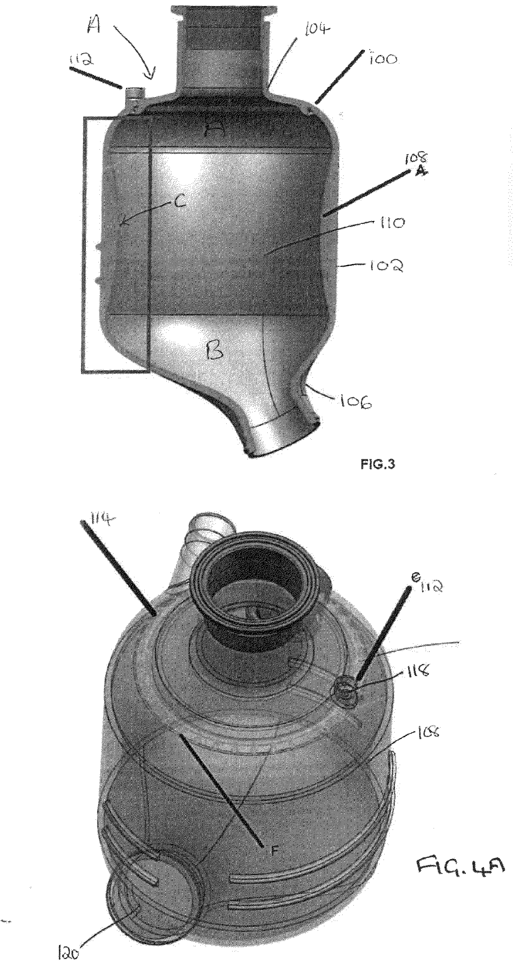

The rinse arrangement according to this disclosure is designed to address these problems as will be described with reference to Figs. 3 to 8.

Specifically, the arrangement of this disclosure makes use of the coanda effect to distribute the rinse fluid around the interior of the tank. The coanda effect is the tendency of a fluid jet to stay attached to a convex surface. The effect can be commonly seen when water flows over the back of a spoon. By shaping the interior walls of the tank to create a convex surface onto which the rinse fluid is incident, the arrangement ensures that the rinse fluid follows this convex surface - i.e. adheres to it from the entry point of the fluid, typically at the top of the tank, to the bottom of the tank, rather than the fluid being forcefully ejected from the rinse nozzle into the tank interior and contacting the surface due to either the pressure of the jet from the nozzle and/or to gravity as the fluid falls to the bottom of the tank.

In more detail, the assembly includes a tank 100 having an outer wall 102, a top 104 and a bottom 106, and an inner wall 108 which defines an interior volume 110 of the tank to be cleaned by the rinse arrangement. An inlet port 112 for the rinse fluid is provided in the tank at an upper portion A of the tank (either through the top or through an upper region of the outer wall) and extends into the volume 110 to be cleaned. The inner wall 108 is shaped to define a convex shape into the tank interior in the direction from the top to the bottom of the tank - i.e. starting at the top of the tank, the inner wall curves into the volume - i.e. away from the outer wall, and then curves back towards the outer wall as it approaches the bottom of the tank. The convex surface C can best be seen in Figs. 3, 4A, 7 and 8.

Rinse fluid is provided to the tank interior via the inlet port 112 from a rinse fluid source (not shown) - the source may be conventional e.g. a shown in Fig. 1.

In a simple example of the arrangement of this disclosure, rinse fluid may be provided directly through the inlet port 112 where it contacts the inner wall at the top region and, due to the coanda effect, adheres to and follows the convex surface C down to a bottom region B of the tank.

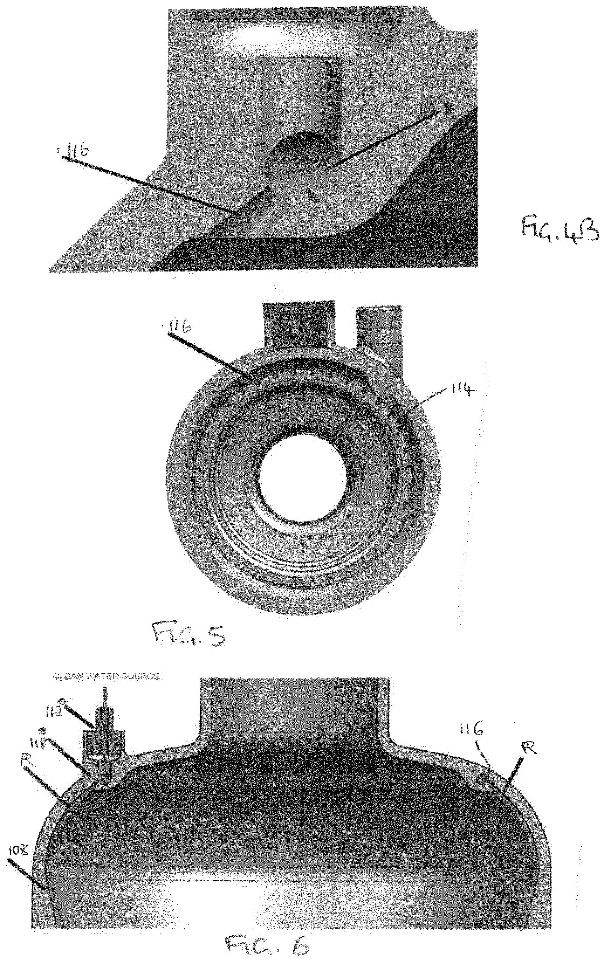

In a more effective design, a fluid channel 114 is provided in fluid contact with the inlet port 112, the fluid channel 114 extending around the inner circumference of the tank at the top region of the tank. The fluid channel 114 is provided with a number of outlet channels or openings 116 (best seen in Fig. 5, and in detail in Fig. 4B) such that rinse fluid flows from the inlet port 112 into the channel 114 and as it flows around the top of the tank in the fluid channel 114 it flows out through the multiple channels or openings 116 to distribute the rinse fluid from the inlet port around the top of the tank. From the openings 116, the rinse fluid contacts the inner wall 108 and flows down the convex surface C to the bottom of the tank. This provides a more complete coverage of the tank inner wall 108 with rinse fluid. The number and size of the openings 116 can be varied according to the requirements of the tank.

To achieve the full benefits of the coanda effect and to ensure the rinse fluid adheres to the convex surface C to the greatest extent possible, the fluid should contact the inner wall tangentially to the wall. Therefore, the inlet port and/or the fluid channel and openings should be arranged relative to the convex surface C so as to provide a tangential contact of the rinse fluid. An example of the flow transition from the fluid channel through the openings 116 can be seen in Fig. 4B.

Whilst it is feasible for the rinse fluid to be provided to the inner wall 108 in a relatively unpressurised stream from the inlet port or openings 116, the cleaning effect will be improved if the fluid is provided in a pressurised spray. The pressure should be selected to maximise the cleaning effect without losing the coanda effect. The fluid is provided from the inlet port through a nozzle 118 into contact with the inner wall (via the fluid channel if provided).

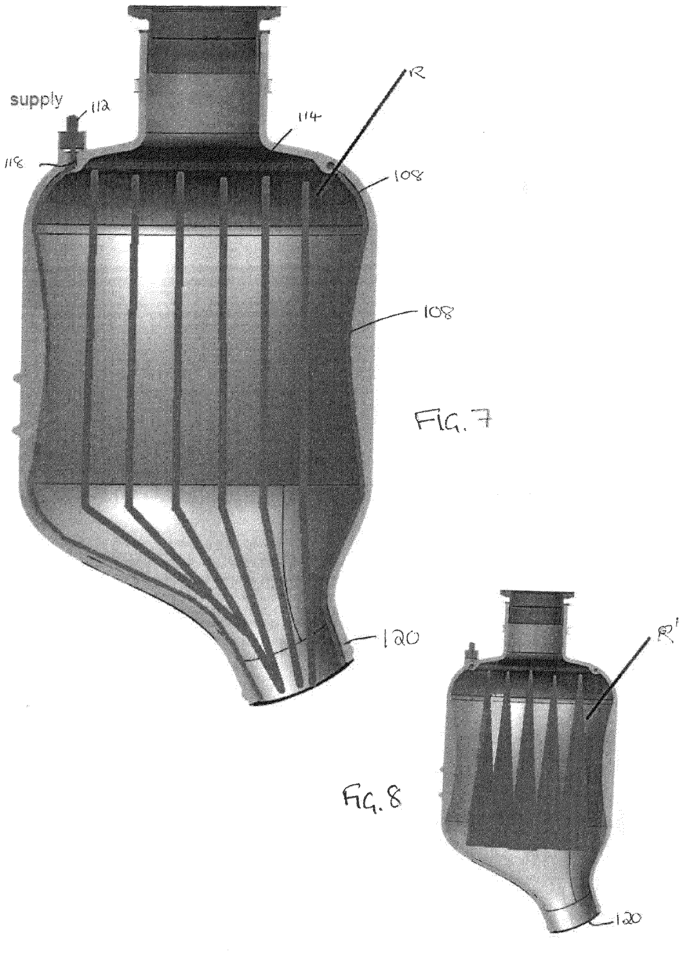

Fig. 7 shows how the rinse fluid R flows through the tank to clean the inner wall 108. In the example shown, the rinse fluid (e.g. clean water/water and detergent) is provided to the inlet port 112 into a nozzle 110 which send the fluid into the circumferential fluid channel 114. The fluid channel is provided with a plurality of outlet channels or openings 116 via which streams R of rinse fluid exit the fluid channel and make contact with the tank inner wall 108. For best results, the openings 116 should be tangential to the inner wall so that when the fluid makes contact with the inner wall, having a convex surface C, the fluid adheres to and follows the convex surface, due to the coanda effect, to the bottom of the tank, where it can exit the tank via a drain 120.

The coverage of the inner wall with rinse fluid, especially at the bottom of the tank, can be improved by shaping the outlet openings 116 to have a conical shape (see Fig. 4B and Fig. 8). This ejects the fluid to the inner wall 108 in a conical stream that then spreads, in a conical flow, as indicated by R' towards the bottom of the tank. Because the pressure of the stream will generally be less at the bottom of the tank than at the top and/or because sediment and large waste has a tendency to collect towards the bottom of the tank, this can provide a stringer cleaning effect in the bottom region where it is most needed. The effect of this is that the conical streams R' may also meet and interact at the bottom of the tank as seen in Fig. 8. The confluence of fluid from different directions can have a better cleaning effect in that region.

The convex surface of the inner wall can be formed using additive manufacture. Any or all of the other parts of the arrangement can also be formed either separately or integrally using additive manufacture.

The arrangement according to this disclosure therefore provides a simple, inexpensive and effective way of thoroughly cleaning the inside of a tank.

## Claims

1. A rinse arrangement for cleaning an interior volume of a tank, the arrangement comprising:
a tank (100), the interior of which is to be cleaned, the tank having a top (104), a bottom (106), and, extending from the top to the bottom, an outer wall (102) and an inner wall (108) defining the interior volume (110); and
a rinse fluid inlet port (112) mounted to an upper region of the tank, the inlet port having a first end and configured to be fluidly connected to a rinse fluid supply, in use, and a second end that extends into the tank interior; and
wherein
the inner wall (108) has a convex shape from the top to the bottom, defining a convex surface (C) curving in towards the interior volume (110).

2. The rinse arrangement of claim 1, further comprising a rinse nozzle (118) for ejecting rinse fluid from the inlet port into the interior of the tank.

3. The rinse arrangement of claim 1 or 2, further comprising a circumferential fluid channel (114) in fluid communication with the inlet port and extending circumferentially around a top region of the tank, the fluid channel having a plurality of outlet channels (116) via which fluid flows from the fluid channel into the interior of the tank.

4. The rinse arrangement of claim 3, wherein the outlet channels (116) are arranged to outlet fluid tangentially to the inner wall (108).

5. The rinse arrangement of claim 3 or 4, wherein the outlet channels have a conical form.

6. The rinse arrangement of any preceding claim, further comprising a drain outlet (120) at the bottom of the tank.

7. The rinse arrangement of any preceding claim, wherein rinse fluid from the inlet is provided to the tank interior under pressure.

8. The rinse arrangement of any preceding claim, further comprising a rinse fluid supply in fluid communication with the inlet port.

9. The rinse arrangement of any preceding claim, wherein the tank is a waste tank.

10. The rinse arrangement of claim 9, wherein the tank is a waste tank of an aircraft.

11. The rinse arrangement of any preceding claim formed by additive manufacture.

12. A method of cleaning the interior of a tank of a rinse arrangement of any preceding claim, the method comprising:
providing rinse fluid from a rinse fluid source to the inlet port, the fluid adhering to and following the convex surface (C); and
draining rinse fluid from the bottom of the tank.
